# EUROPEAN PATENT APPLICATION

(11) **EP 3 480 768 A1**
(43) Date of publication of application: **08.05.2019**
(21) Application number: 17819126.8
(22) Date of filing: 19.06.2017
(51) Int. Cl.: G06Q 30/06

(54) **NETWORK TRANSACTION METHOD AND DEVICE BASED ON PRIVILEGE SEPARATION CONTROL**

(30) Priority: 29.06.2016 CN 201610500388
(71) Applicant: Alibaba Group Holding Limited, Grand Cayman (KY)
(72) Inventor: DONG, Yinuo, Hangzhou Zhejiang 311121 (CN); ZHOU, Xiaohua, Hangzhou Zhejiang 311121 (CN); PI, Yuxuan, Hangzhou Zhejiang 311121 (CN); WANG, Xiaoying, Hangzhou Zhejiang 311121 (CN); SHEN, Ye, Hangzhou Zhejiang 311121 (CN)
(74) Representative: Branderhorst, Matthijs Pieter Arie
(86) International application number: PCT/CN2017/088944
(87) International publication number: WO 2018/001129

(57) **Abstract**

This application discloses a network transaction method and device based on authorization separation control. The network transaction method based on separation and control of authorizations comprises: transaction system receiving an order submitted by a first account; determining a second account bundled with the first account based on prestored bundling relationships; initiating a payment request to the second account based on the order submitted by the first account; in response to the second account confirming the payment request, determining a payment of the order being successful. By using a mechanism for separating buyer user's ordering authorizations and payment authorizations, the technical solution provided by this application allows different accounts to carry out ordering and payment operations for one transaction, thereby avoiding the problem of inconvenience resulting from multiple users using the same account, while also effectively reducing the unnecessary consumption of system side resource.

## Description

This application claims priority to the Chinese Patent Application Number 201610500388.0, filed on June 29, 2016 and entitled "Network Transaction Method and Device Based on Authorization Separation Control," the entire content of which is incorporated into this application by reference.

### Technical Field

This application relates to the technical field of Internet applications, in particular, to a method and apparatus for network transactions based on the separation and control of authorizations.

### Background

During the process of network transactions, "ordering" and "paying" are two basic operations for buyer users. Here, "ordering" refers to the operation of a buyer user selecting and confirming goods to be purchased, and "paying" refers to the process of the buyer user transferring corresponding amount of funds to a seller user for the goods to be purchased.

Usually, "ordering" and "paying" are carried out by the same user, but under some circumstances, there could be the need for different users to carry out "ordering" and "paying". For example, in a corporation procurement scenario, based on the internal allocation of authority in the corporation, procurement personnel should conduct ordering, and the officers or financial administrator should conduct payment. Existing network transaction systems cannot successfully meet such real-life requirements, thus leading to user inconvenience and possibly resulting in the unnecessary consumption of system resources.

### Summary

For this technical problem, this application provides a network transaction method and device based on authorization separation control, the technical solution of which is as follows:
A network transaction method based on the separation and control of authorizations, applicable to a transaction system side, pre-establishing and storing bundling relationships between different accounts, with one of any two bundled accounts at least having buyer user ordering authorizations, and the other one at least having buyer user payment authorizations, and the network transaction method comprising:
receiving an order submitted by a first account;
determining a second account bundled with the first account based on prestored bundling relationships;
initiating a payment request to the second account based on the order submitted by the first account;
in response to the second account confirming the payment request, determining that the order has been successfully paid.

A network transaction apparatus based on the separation and control of authorizations, applicable to a transaction system side, pre-establishing and storing bundling relationships between different accounts, with one of any two bundled accounts at least having buyer user ordering authorizations, and the other one at least having buyer user payment authorizations, and the network transaction apparatus comprising:
an order receiving module, configured to receive an order submitted by a first account;
a payment account determination module, configured to determine a second account bundled with the first account based on prestored bundling relationships;
a payment request initiation module, configured to initiate a payment request to the second account based on the order submitted by the first account;
a payment determination module, configured to, in response to the second account confirming the payment request, determine the successful payment of the order.

By using a mechanism for separating buyer user ordering authorizations and payment authorizations, the technical solution provided by this application permits different accounts to carry out ordering and payment operations for one transaction, thereby avoiding the problem of inconvenience resulting from multiple users using the same account, while also effectively reducing the unnecessary consumption of system side resources.

It should be understood that the preceding general description and the detailed description below are merely exemplary and explanatory, and do not limit this application.

### Brief Description of the Drawings

In order to more clearly explain the embodiments of this application or the technical solutions of current technologies, a simple introduction to the drawings required in the description of embodiments or current technologies is given below. Clearly, the drawings in the following descriptions merely show a few embodiments in this application. For a person having ordinary skill in the art, it is possible to obtain other drawings based on these drawings.
Figure 1 is a flow diagram of the network transaction method of this application;
Figure 2 is a schematic diagram of the network transaction apparatus of this application.

### Detailed Description

To enable a person skilled in the art to better understand the technical solutions of this application, in combination with the drawings of the embodiments of this application, a detailed description of the technical solutions in the embodiments of this application is given below. Of course, the described embodiments are merely a portion of the embodiments of this application, and are not the full complement of embodiments. Based on the embodiments of this application, all other embodiments obtained by a person having ordinary skill in the art shall fall within the scope of protection of this application.

First, it should be noted that, in this application, "user" refers to an actual operator. For example, a procurement personal and a financial administrator are different users. "Account" refers to a virtual identifier in a network. The activity of an actual user in a network is reflected by "account" behavior. In real-life applications, even though it is permissible for multiple actual users to use the same account, this will lead to inconvenience.

Today's network transaction systems primarily are designed with independent buyer users in mind. That is, the default is for ordering and payment to be completed by the same person in a transaction. However, with this mechanism, with regard to the demand scenario mentioned in the Background section, with ordering and payment being carried out by different people, it is necessary for the ordering personnel and payment personnel to use the same transaction account to complete their own operations. So in real-life application, after the ordering personnel submits an order, they need to have the payment personnel complete the payment on the current device, or notify the payment personnel by phone, etc., and have the payment personnel log in to the same account on another device and complete the payment.

Clearly, because the actual authorizations of the "user" are not in agreement with the authorizations of the "account", it is necessary to use the "unconventional" approach of multiple users sharing the same account to solve the problem. However, the user's actual operations are very complicated and cumbersome, regardless of the approaches used. Also, because multiple people are using the same account, various types of problems become inevitable, such as impossible concurrent use, operation conflicts, repeated log-ins, etc., lowering work efficiency. As for the system side, this could add a lot of extra processing, e.g.: error prompts, identity authentication, etc., resulting in the unnecessary waste of processing resources.

Targeting the problems of the existing technologies, the technical solution provided by this application is to permit the configuration of different buyer operation authorizations, comprising ordering authorizations, payment authorizations, etc., for different accounts, and to perform bundling of accounts with different operation authorizations. When actually performing a transaction, accounts in a bundling relationship can coordinate to carry out the operations of one transaction, thereby effectively avoiding the various problems resulting from having multiple people sharing the same account.

Assuming in a small corporation, A is a procurement personal, and B is a finance supervisor. Based on the solution of this application, in a transaction system, it is possible for user A and user B to separately register different accounts. Assuming the registered account identifiers are ID_a and ID_b, respectively, account ID_a has buyer user ordering authorizations, and account ID_b has buyer user payment authorizations. Next, a bundling relationship between account ID_a and account ID_b is established and stored on the transaction system side. The significance of establishing bundling relationships is: in the current transaction system, it permits two bundled accounts to act together as a buyer and coordinate in the completion of the same transaction.

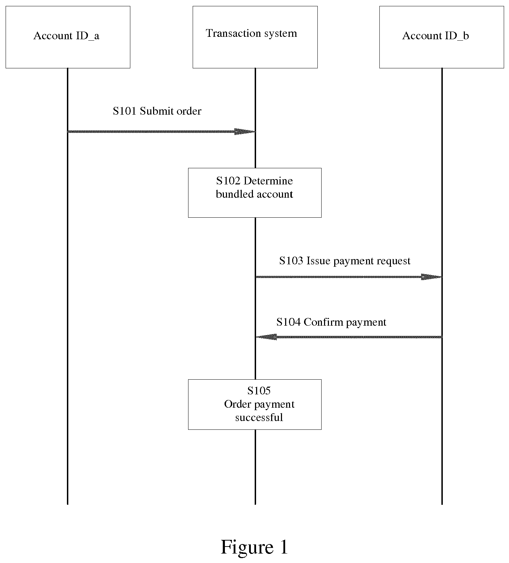

Figure 1 shows an interactive flow diagram of the network transaction method provided by this application. It should be noted that the interacting entities involved in the diagram are: account ID_a and account ID_b, i.e.: they can be understood to be logical transaction entities, or two specific examples of "account" objects in the transaction system's software system. They can also be understood as actual user devices, for example: mobile phones, PCs, etc. which are currently logged into an account. "Transaction system" can be understood as software and hardware platforms used to carry out a network transaction in a broad sense. These elements do not affect the description of the solution of this application.

S101, account ID_a submits an order to the transaction system.

Based on the preceding description, account ID_a is an account with ordering authorizations. Under normal circumstances, this account is used by a user actually executing an ordering task (for example, a procurement personal). Here, account ID_a is assumed to be used by procurement personal A; and procurement personal A selects a model, style, quantity, and merchant, etc. for the goods to be purchased on an e-commerce platform, uses specific operations to generate a corresponding order, and submits the order to the transaction system. For convenience of description, this order is identified as X. In addition to containing information on the goods to be purchased, this order should also contain the identifier of the submitting account, i.e.: ID_a, indicating that this order was submitted by account ID_a.

S102, based on prestored bundling relationships, the account bundled with account ID_a is determined.

After the transaction system receives an order, first it parses the identifier of the account submitting the order, then, based on prestored account bundling relationships, it determines the account bundled with the account submitting the order. Specifically, it determines the "account with payment authorizations" that is bundled with the "account with ordering authorizations."

In this embodiment, the ordering account for order X is ID_a, and based on prestored bundling information, it can be determined that the account bundled with account ID_a is account ID_b.

S103, a payment request to the account bundled with account ID_a is initiated for the order submitted by account ID_a.

Based on the solution of this application, it is not necessary for ordering and payment in one transaction to be carried out by the same account. In this embodiment, because account ID_a does not have payment authorizations, subsequent payment operations for order X are passed on to account ID_b, with which it is bundled, for completion.

The initiation of a payment request to a bundled account can be achieved in many ways, e.g.: transmitting a notification message to the corresponding account using the transaction system's internal message system. If other contact modes are associated with the target account, such as email, text messaging, instant messaging, etc., these channels can also be used to transmit a notification message to the target account, in order for the real user corresponding to the target account to be able to see the notification as quickly as possible and make a payment.

To facilitate the usage by the payment user, it is possible to provide a short-cut operation portal in the notification message, to confirm the payment request. For example, a link that can directly redirect the user to an order information interface and payment confirmation interface can be added to the body of the notification message, or a payment QR code can be directly added to the body of the notification message, etc. In order to meet the payment user's demands on reviewing the orders, it is also possible to add order details or summary information in the body of the notification message or in the payment confirmation interface.

It can be understood that different real users can communicate without relying upon functions provided by the transaction system. Therefore, "active notification" is not a required function of the transaction system.

S104 ∼ S105, account ID_b confirms the payment request, and the transaction system determines that the order payment has been successfully completed.

After account ID_b confirms order X and carries out the corresponding payment, the transaction system will receive relevant confirmation information. Then, it can determine that this payment has been successfully completed and enter into the subsequent shipping and delivery process.

Compared to current technologies, in one aspect, the solution of this application allows different operation authorizations to be configured for different buyer accounts, in order to match account authorizations with actual personnel duties, ensuring a one-to-one correspondence between virtual accounts and actual users. In another aspect, by setting up bundling relationships between different accounts, it enables the accounts in a bundling relationship to coordinate and carry out the operations of one transaction. Users with different duties use different accounts, with each performing their respective functions. This can effectively avoid various problems such as operation conflicts and repeated log-ins, and boost overall work efficiency. As for the system side, it can correspondingly reduce extra processing such as error prompts and identity authentication, cutting down unnecessary consumptions of processing resources.

In the aforementioned embodiment, only "bundling of 1 ordering account with 1 payment account" is used to give an illustrative explanation of the basic solution of this application, but in other implementation manners of this application, the bundling relationships can be more flexibly configured in order to meet a variety of complex usage demands. Further examples are given below.

Based on the solution of this application, for two bundled accounts, one should at least have buyer user ordering authorizations, and the other would at least have buyer user payment authorizations. However, this does not mean that each account is only allowed to have one kind of buyer user authorizations. For example, with regard to the aforementioned account ID_a and account ID_b, they can be configured so account ID_a only has ordering authorizations, and account ID_b has both ordering authorizations and payment authorizations. An actual demand corresponding to this approach might be: a procurement personal uses account ID_a and can only place orders, but not make payments; an officer uses account ID_b and can review and pay the orders placed by the procurement personal, as well as place their own orders.

Correspondingly, in the aforementioned Step S102, after the transaction system receives an order and parses the identifier of the account submitting the order, it can first determine whether this account has payment authorizations. If not, it goes on to determine the accounts bundled with this account based on prestored bundling relationships. If the account submitting the order has payment authorizations (for example, account ID_b), the transaction can be carried out according to traditional transaction flows, i.e.: the same account performing ordering and payment.

It can be understood that, in addition to buyer ordering authorizations and buyer payment authorizations, an account in a transaction system can also comprise other types of authorizations. This may be not related to the solution of this application and will not be explained further.

In addition, based on the solution of this application, the number of accounts corresponding to each bundling relationship is 2, but any given account is permitted to have multiple bundling relationships, i.e.: one account could be bundled with multiple other accounts. For example:
One account having payment authorizations bundled with multiple accounts having ordering authorizations:
An actual demand corresponding to this type of bundling configuration could be: Multiple procurement personals could use their own exclusive accounts to place orders, which are then handed over together to a principal for review and payment. It is easy to imagine that, if the solution of multiple people using the same account provided by current technologies is employed, it would be extremely troublesome in actual implementation. However, by implementing the solution of this application, bundling one account having payment authorizations together with multiple accounts having ordering authorizations, it would be very easy to meet this need.

A typical configuration solution is to set up a system of main accounts and sub-accounts. One main account could open multiple sub-accounts under its name, with bundling relationships automatically being established between the sub-accounts and main account. The main account user can add or delete sub-accounts and modify sub-account authorizations, thereby satisfying administrative demands in actual usage. For example, a main account has payment authorizations, and it can be provided to the officers and financial administrator for their use. Under the name of this main account, multiple sub-accounts with ordering authorizations could be opened, for use by multiple procurement personals. Under this configuration solution, different procurement personals could separately use the sub-accounts to make purchases, all of the ordering information would be reported to the main account, and the relevant principal would perform a unified review and payment of these orders.

One account can have ordering authorizations bundled with multiple accounts having payment authorizations:
An actual demand corresponding to this type of bundling configuration might be: One procurement personal conducts purchasing for multiple different departments, and correspondingly, different principals need to review the orders and confirm payments.

Under this bundling configuration, since the payment account for an order is not unique, the submitted order may need to include an identifier of a designated account with payment authorizations, to allow the transaction system to determine which account is to pay the current order. Naturally, regarding the identifier of the account with payment authorizations included in the order, the transaction system can further verify whether there is a bundling relationship between the account submitting the order and its designated payment account. In addition, prior to the submission of the order, the transaction system can also provide the account currently placing the order with information of the multiple payment accounts with which it is bundled, based on bundling relationships, to facilitate direct selections. In summary, the transaction system can determine which account a payment request for the current order is to be sent based on prestored bundling information and the account identifier included in the order.

For example, account ID_a, which has ordering authorizations, is bundled with three accounts having payment authorizations: ID_b1, ID_b2, and ID_b3. Therefore, when account ID_a places an order, the transaction system can display ID_b1, ID_b2, and ID_b3 in a list in the order confirmation interface and ask the ordering user to select one as the payment account of the current order. Assuming that the ordering user selects ID_b2, "ID_b2" will be included in the order as additional information, and subsequently, the transaction system will directly transmit this order's payment request to account ID_b2.

Based on the solution of this application, the bundling relationships between accounts can be designated during the account registration phase, and they can also be designated or modified after account registration as needed.

In addition, it can be understood that in the examples of this application, "transaction system" refers to software and hardware used to carry out network transactions, in the broad sense; it should not be understood to be a given, specific physical device or e-commerce platform. For example, when using a third party payment transaction system, the "transaction system" can be divided, in terms of functions, into two parts: an e-commerce platform and a payment platform. Here, the e-commerce platform is primarily used to carry out functions related to "ordering", and the payment platform is primarily used to carry out functions related to "paying". The modified steps corresponding to the solution of this application are as follows: A first account submits an order to the e-commerce platform ; the e-commerce platform initiates a payment request to a second account through the payment platform; after the second account makes the payment through the payment platform, the payment platform feeds back successful payment information to the e-commerce platform, and the e-commerce platform determines that this order has been successfully paid, and can enter into the subsequent shipping and delivery process.

Here it should be noted that the e-commerce platform and payment platform could use different account systems, but one real user should have a cross-platform bundling relationship (note that "bundling" here has a different meaning from "bundling" in the solution of this application) for an e-commerce platform account and a payment platform account. Therefore, the bundling of two accounts in the solution of this application could be the bundling of two accounts in an e-commerce platform, the bundling of two accounts in a payment platform, or the bundling of an e-commerce platform account and a payment platform account. Correspondingly, bundling relationships can be stored in the e-commerce platform or in the payment platform, or they can be exchanged and synchronized in a given form between the two platforms. This can be flexibly configured by a person skilled in the art as needed.

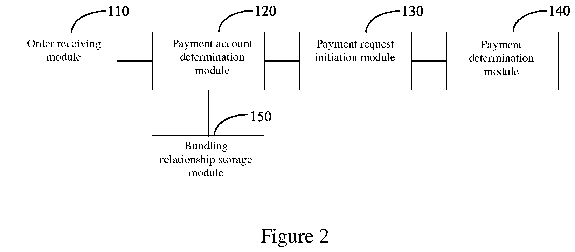

Corresponding to the aforementioned method embodiments, this application also provides a network transaction apparatus based on the separation and control of authorizations. This apparatus is configured on the transaction system side. As shown in Figure 2, this apparatus can comprise:
a bundling relationship storage module 110, used to store pre-established bundling relationships between different accounts; one of any two bundled accounts at least has buyer user ordering authorizations, and the other one at least has buyer user payment authorizations;
an order receiving module 120, used to receive an order submitted by a first account;
a payment account determination module 130, used to determine a second account bundled with the first account based on prestored bundling relationships;
a payment request initiation module 140, used to initiate a payment request to the second account for the order submitted by the first account;
a payment determination module 150, used to determine that the order has been successfully paid after the second account confirms the payment request.

In one implementation manner of this application, the payment account determination module 130 can be used to:
determine whether the first account has payment authorizations, and if not, determine a second account bundled with the first account based on prestored bundling relationships.

In one implementation manner of this application, the payment request initiation module 140 can be used to:
use internal messages of the transaction system to send a payment request notification message to the second account;
or
use the associated contact mode of the second account to send a payment request notification message to the second account.

In one implementation manner of this application, a short-cut operation portal can be provided in the payment notification message, used to confirm the payment request.

In one implementation manner of this application, the bundling relationships between different accounts can comprise:
one account having payment authorizations bundled with multiple accounts having ordering authorizations,
or
one account having ordering authorizations bundled with multiple accounts having payment authorizations.

In one implementation manner of this application, when one account having ordering authorizations is bundled with multiple accounts having ordering authorizations, the order submitted by the first account can include the identifier of a designated account with payment authorizations;

Correspondingly, the payment account determination module 150 can be used to: determine the second account bundled with the first account based on prestored bundling information and the identifier.

The preceding implementation manner descriptions make it clear that a person skilled in the art can clearly understand that this application may be achieved with the help of software plus the necessary general-purpose hardware platform modes. Based on such an understanding, the essence of the technical solution of this application, or the part contributing to current technologies, may be implemented in the form of a software product. This computer software product may be stored in a storage medium, such as a ROM/RAM, magnetic disk, or optical disk, and may include a number of instructions to cause a computer device (which may be a personal computer, server, or network device) to perform the methods of the embodiments, or certain parts of the embodiments, of this application.

The separate embodiments in this Description are described progressively, and it is sufficient for the embodiments to reference each other regarding their identical or similar parts. The description of each embodiment focuses on the ways in which it differs from other embodiments. In particular, the descriptions of apparatus embodiments are relatively simple because they are basically identical to the method embodiments, and the description of correlated features by reference to the method embodiments is sufficient. The apparatus embodiments described above are merely illustrative. Here, the modules described as separate parts may or may not be physically separate. When implementing the embodiment solutions of this application, the functions of each module may be achieved in the same or multiple software and/or hardware units. Some or all of the modules may be selected to achieve the objective of the solution of these embodiments, based on actual needs. This can be understood and implemented by a person having ordinary skill in the art, making no expenditure of creative labor

The preceding are merely specific implementation manners of this application. It should be noted that a person having ordinary skill in the art may make a number of improvements and embellishments without straying from the principles of this application, and these improvements and embellishments shall fall within the scope of protection of this application.

## Claims

1. A network transaction method based on separation and control of authorizations, applicable to a transaction system side, wherein bundling relationships between different accounts are pre-established and stored, one of any two bundled accounts at least has buyer user ordering authorizations, and the other one at least has buyer user payment authorizations, and the network transaction method comprises:
receiving an order submitted by a first account;
determining a second account bundled with the first account based on the prestored bundling relationships;
initiating a payment request to the second account based on the order submitted by the first account;
in response to the second account confirming the payment request, determining a payment of the order being successful.

2. The method according to claim 1, wherein determining a second account bundled with the first account based on the prestored bundling relationships comprises:
determining whether the first account has payment authorizations, and if not, further determining a second account bundled with the first account based on the prestored bundling relationships.

3. The method according to claim 1, wherein initiating a payment request to the second account comprises:
using internal messages of the transaction system to send a payment request notification message to the second account;
or
using the associated contact mode of the second account to send the payment request notification message to the second account.

4. The method according to claim 3, wherein a short-cut operation portal is included in the payment notification message, configured to confirm the payment request.

5. The method according to claim 1, wherein the bundling relationships between different accounts comprise:
one account having payment authorizations bundled with multiple accounts having ordering authorizations,
or
one account having ordering authorizations bundled with multiple accounts having payment authorizations.

6. The method according to claim 5, wherein, when one account having ordering authorizations is bundled with multiple accounts having payment authorizations, the order submitted by the first account includes an identifier of a designated account with payment authorizations;
determining a second account bundled with the first account based on the prestored bundling relationships comprises: determining the second account bundled with the first account based on the prestored bundling information and the identifier.

7. A network transaction apparatus based on separation and control of authorizations, applicable to a transaction system side, wherein the network transaction apparatus comprises:
a bundling relationship storage module, configured to store pre-established bundling relationships between different accounts; one of any two bundled accounts at least has buyer user ordering authorizations, and the other one at least has buyer user payment authorizations;
an order receiving module, configured to receive an order submitted by a first account;
a payment account determination module, configured to determine a second account bundled with the first account based on the prestored bundling relationships;
a payment request initiation module, configured to initiate a payment request to the second account based on the order submitted by the first account;
a payment determination module, configured to, in response to the second account confirming the payment request, determine a payment of the order being successful.

8. The apparatus according to claim 7, wherein the payment account determination module is configured to:
determine whether the first account has payment authorizations, and if not, further determine a second account bundled with the first account based on the prestored bundling relationships.

9. The apparatus according to claim 7, wherein the payment request initiation module is configured to:
send a payment request notification message to the second account using internal messages of the transaction system;
or
send the payment request notification message to the second account using an associated contact mode of the second account.

10. The apparatus according to claim 9, wherein there is a short-cut operation portal in the payment notification message, configured to confirm the payment request.

11. The apparatus according to claim 7, wherein the bundling relationships between different accounts comprise:
one account having payment authorizations bundled with multiple accounts having ordering authorizations,
or
one account having ordering authorizations bundled with multiple accounts having payment authorizations.

12. The apparatus according to claim 7, wherein, when one account having ordering authorizations is bundled with multiple accounts having payment authorizations, the order submitted by the first account includes an identifier of a designated account with payment authorizations;
the payment account determination module is configured to: determine the second account bundled with the first account based on the prestored bundling information and the identifier.
